# EUROPEAN PATENT APPLICATION

(11) **EP 3 907 482 A1**
(43) Date of publication of application: **10.11.2021**
(21) Application number: 20173170.0
(22) Date of filing: 06.05.2020
(51) Int. Cl.: G01J 3/02, G01J 3/433

(54) **SPECTROMETER, PORTABLE DEVICE AND METHOD FOR DETECTING ELECTROMAGNETIC RADIATION**

(71) Applicant: AMS AG, 8141 Premstätten (AT)
(72) Inventor: Morecroft, Deborah, 8141 Premstätten (AT); Castano Sanchez, Fernando Jesus, 8141 Premstätten (AT); Hopper, Richard, 8141 Premstätten (AT); Boual, Sophie, 8141 Premstätten (AT); Eilmsteiner, Gerhard, 8141 Premstätten (AT); Serrano Gotarredona, Rafael, 8141 Premstätten (AT); Pulko, Jozef, 8141 Premstätten (AT); Meinhardt, Gerald, 8141 Premstätten (AT)
(74) Representative: Epping - Hermann - Fischer

(57) **Abstract**

A spectrometer (10) comprises an emitter (11) that is configured to emit electromagnetic radiation, a sample area (12) that is arranged at an outer face (13) of the spectrometer (10), a modulation unit (14) comprising an electrochromic material, an optical filter (15), an optical detector (16), an integrated circuit (17) that has a main plane of extension, and an optical path for electromagnetic radiation emitted by the emitter (11) towards the optical detector (16) via the sample area (12), the modulation unit (14) and the optical filter (15), wherein the electrochromic material is electrically connected with the integrated circuit (17), and the modulation unit (14) is configured to modulate electromagnetic radiation temporally. Furthermore, a method for detecting electromagnetic radiation is provided.

## Description

The present application relates to a spectrometer, to a portable device and to a method for detecting electromagnetic radiation.

Infrared spectrometers are employed in a wide range of applications, for example in gas detection, medical sensing, environmental monitoring and industrial process control. In order to employ infrared spectrometers in portable devices such as mobile phones a miniaturization of the spectrometers is required. Furthermore, for consumer applications a reduction of the cost is required.

For the detection of electromagnetic radiation in the infrared range typically a cooling of the detector is required in order to increase the signal-to-noise ratio. However, the cooling consumes space, which contradicts a miniaturization of the spectrometer. Thermal detectors which do not require cooling tend to have a significantly lower detectivity. In addition, the performance of emitters of the spectrometer can vary significantly with temperature. Among others, these factors can lead to a decreased accuracy of the spectrometer.

It is an objective to provide a spectrometer with an increased accuracy. It is further an objective to provide a method for detecting electromagnetic radiation with an increased accuracy.

These objectives are achieved by the subject matter of the independent claims. Further developments and embodiments are described in dependent claims.

According to at least one embodiment of the spectrometer, the spectrometer comprises an emitter that is configured to emit electromagnetic radiation. For example, the emitter is a light-emitting diode. The emitter can be configured to emit electromagnetic radiation in the visible and the infrared range. In particular, the emitter is configured to emit electromagnetic radiation in the infrared range. The emitter can be a single radiation source. Alternatively, the emitter comprises an array of radiation sources. The emitter can be configured to emit electromagnetic radiation within a predefined wavelength range. For example, the emitter is configured to emit electromagnetic radiation within a wavelength range of at least 100 nm.

The spectrometer further comprises a sample area that is arranged at an outer face of the spectrometer. The outer faces of the spectrometer are surfaces of the spectrometer that are in contact with the environment of the spectrometer. This means, the spectrometer is delimited by its outer faces. The sample area can be a part of an outer face of the spectrometer. For example, the sample area is arranged at one side of the spectrometer. The sample area can be arranged at a top side of the spectrometer. The sample area is in direct contact with the environment of the spectrometer. The sample area can be configured to be in direct contact with sample matter to be analyzed. The sample matter can be a solid, a liquid or a gas.

The spectrometer further comprises a modulation unit comprising an electrochromic material. The electrochromic material is configured to change its optical properties when a voltage is applied to the electrochromic material. For example, the transmission for electromagnetic radiation is changed when a voltage is applied to the electrochromic material. The electrochromic material can comprise tungsten oxide (WO₃). It is further possible that the electrochromic material comprises an organic polymer. The modulation unit can comprise a stack of layers. The modulation unit can comprise a first electrode on which a charge storage layer is arranged. The charge storage layer can comprise NiO. On the charge storage layer an ion conducting layer can be arranged. The ion conducting layer can comprise Ta₂O₅. On the ion conducting layer an active layer can be arranged. The active layer can comprise the electrochromic material. The electrochromic material can be deposited by sputtering or by evaporation. On the active layer a second electrode can be arranged. The second electrode can be a grid comprising an electrically conductive material. Alternatively, the second electrode can be a very thin layer formed by sputtering. The second electrode comprises for example nickel, chromium or a transparent conductive oxide such as indium tin oxide. A voltage can be applied to the modulation unit via the first and the second electrode. Within the modulation unit an air gap can be arranged in order to improve the spectral response for diffuse light conditions.

The spectrometer further comprises an optical filter. The optical filter can be configured to be transmissive for a predetermined wavelength range. Furthermore, the optical filter can exhibit a high absorption coefficient for electromagnetic radiation outside of the predetermined wavelength range. For example, the optical filter has an absorption coefficient of at least 0.8 for electromagnetic radiation outside of the predetermined wavelength range. In particular, the optical filter has an absorption coefficient of at least 0.9 for electromagnetic radiation outside of the predetermined wavelength range. The optical filter can be an interference filter, for example a Fabry Perot interference filter. The Fabry Perot interference filter can comprise Nb₂O₅ and/or Al₂O₃.

The spectrometer further comprises an optical detector. The optical detector is configured to detect electromagnetic radiation. For this purpose, the optical detector is configured to convert electromagnetic radiation reaching the optical detector into a modulated voltage signal. The optical detector can be a single optical detector. Alternatively, the optical detector can comprise a plurality of detectors arranged as a line or a matrix array.

The spectrometer further comprises an integrated circuit that has a main plane of extension. The integrated circuit can be an application-specific integrated circuit. The integrated circuit can be configured to read and amplify the modulated voltage signal of the optical detector. The integrated circuit can further be configured to control the read-out frequency of the optical detector.

The spectrometer further comprises an optical path for electromagnetic radiation emitted by the emitter towards the optical detector via the sample area, the modulation unit and the optical filter. This means, at least a part of the electromagnetic radiation emitted by the emitter during operation reaches the optical detector via the sample area, the modulation unit and the optical filter. At least a part of the electromagnetic radiation emitted by the emitter during operation passes the sample area, the modulation unit and the optical filter on the way towards the optical detector. That an optical path exists between the emitter and the optical filter can mean that at least a part of the electromagnetic radiation emitted by the emitter during operation is not absorbed or reflected on its way from the emitter towards the optical detector.

The electrochromic material is electrically connected with the integrated circuit. The electrochromic material can be electrically connected with the integrated circuit via the first and the second electrode. The integrated circuit can be configured to control the frequency of the modulation unit. This means, the integrated circuit can be configured to control the frequency of the voltage that is applied to the electrochromic material. The frequency of the voltage that is applied to the electrochromic material can be smaller than 10 kHz.

The modulation unit is configured to modulate electromagnetic radiation temporally. The modulation unit can be configured to modulate electromagnetic radiation emitted by the emitter temporally. This can mean that the intensity of electromagnetic radiation passing the modulation unit is modulated. For example, the intensity of electromagnetic radiation that passed the modulation unit can at a first instant of time be different from the intensity at a second instant of time. After being modulated the intensity of electromagnetic radiation can vary with time. In particular, the intensity of modulated electromagnetic radiation varies periodically with time.

The spectrometer described herein can be configured for the detection of electromagnetic radiation in the visible and/or infrared range with an increased accuracy. Furthermore, the spectrometer can be configured very compact and integrated in portable devices.

For a measurement sample matter is placed on top of the sample area. This means, a solid or liquid is placed on the sample area, or the spectrometer is positioned in the environment of a gas to be detected. In this case, the sample area is in direct contact with the gas. Electromagnetic radiation emitted by the emitter is transmitted, reflected or absorbed by the sample matter. Therefore, the intensity of the wavelengths that are transmitted towards the optical detector via the sample area are changed depending on the characteristic absorption or reflection of the sample matter. In this way different materials can be analyzed.

The spectrometer can be configured particularly small since an optical detector can be employed that requires no cooling. In many cases, optical detectors require cooling in order to improve the accuracy. For the case of the spectrometer described herein the accuracy is improved in another way.

Electromagnetic radiation that is to be detected by the optical detector passes the modulation unit. In the modulation unit the electromagnetic radiation is temporally modulated. The frequency of the modulation is determined by the integrated circuit. The integrated circuit can comprise a lock-in detection function. This means, for a known modulation frequency of the modulated electromagnetic radiation even electromagnetic radiation with a small intensity can be detected. In this way, the signal-to-noise ratio is improved. Since very small intensities of electromagnetic radiation can be detected it is possible to use optical detectors with a low detectivity, as for example thermal detectors or photon detectors. The detectors do not require cooling which is why the size of the spectrometer can be small. It is further possible to employ a low power emitter that can be more reliable and shows less thermal drift. Furthermore, a low power emitter is safer for consumer applications.

Overall, all parts of the spectrometer can be incorporated in one compact component. In particular, all or some parts of the spectrometer can be monolithically integrated. This means different parts of the spectrometer can be grown on top of each other. Thus, the spectrometer can be very small and the cost is reduced. Additionally, space is saved by arranging the sample area at an outer face of the spectrometer.

According to at least one embodiment of the spectrometer the optical filter is configured to transmit electromagnetic radiation modulated by the modulation unit. The optical filter can have a transmission coefficient of at least 0.9 for electromagnetic radiation emitted by the emitter and modulated by the modulation unit. In particular, the optical filter has a transmission coefficient of at least 0.95 for electromagnetic radiation emitted by the emitter and modulated by the modulation unit. The optical filter can further have an absorption coefficient of at least 0.8 for electromagnetic radiation with wavelengths that are different from the wavelengths emitted by the emitter. In this way, the optical filter absorbs electromagnetic radiation that is not desired to be detected by the optical detector. Thus, the signal-to-noise ratio of the spectrometer can be improved.

According to at least one embodiment of the spectrometer the integrated circuit comprises a lock-in detection function. The lock-in detection function is a phase sensitive technique used to extract a low level signal buried within noise. In this case the lock-in detection function is employed to detect the electromagnetic radiation that is modulated by the modulation unit. The electromagnetic radiation reaching the optical detector can also have other components than the electromagnetic radiation modulated by the modulation unit. The lock-in detection function enables to extract the modulated electromagnetic radiation from ambient electromagnetic radiation. Employing the lock-in detection function thus improves the signal-to-noise ratio.

According to at least one embodiment of the spectrometer the optical detector is configured to detect electromagnetic radiation in the visible and in the infrared range. In particular, the optical detector is configured to detect electromagnetic radiation in the infrared range. Because of the setup of the spectrometer, optical detectors that are sensitive far into the infrared range can be employed. A sensitivity far in the infrared range, for example up to 10 µm, is advantageous since a wider range of materials can be analyzed.

According to at least one embodiment of the spectrometer the optical detector is a photon detector or a thermal detector. Both detectors do not require a cooling in the spectrometer described herein. The sensitivity of the detectors is optimized by employing the modulation unit and the lock-in detection function of the integrated circuit. Photon detectors have the advantage that they have a high detectivity. Thermal detectors have the advantage that they can detect electromagnetic radiation within a broad wavelength range. By employing a photon detector or a thermal detector the size of the spectrometer can be reduced as no cooling is required and the cost of the spectrometer can be reduced as well.

According to at least one embodiment of the spectrometer a further optical detector is arranged adjacent to the emitter. The further optical detector can be configured to detect electromagnetic radiation that is emitted by the emitter and reflected at the sample matter. This means, there is an optical path from the emitter towards the further optical detector via the sample area. By detecting electromagnetic radiation reflected back from the modulation unit the temperature drift of the emitter can be determined and calibrated. In this way a more reproducible and more reliable measurement of the spectrometer is enabled.

According to at least one embodiment of the spectrometer the emitter, the modulation unit, the optical filter, the optical detector and the integrated circuit are arranged on the same side of the sample area. In other words, in a vertical direction that is perpendicular to the main plane of extension of the integrated circuit the emitter, the modulation unit, the optical filter, the optical detector and the integrated circuit are arranged below the sample area. This means, the sample area can be arranged at a top side of the spectrometer. This arrangement has the advantage that the sample matter can be disposed on the sample area. This enables to analyze a wide range of different materials. Furthermore, the spectrometer has a very compact design so that the spectrometer can be incorporated in small portable devices. For a compact design of the spectrometer the components of the spectrometer can be integrated monolithically. This means, different components of the spectrometer can be grown directly on top of each other.

According to at least one embodiment of the spectrometer the modulation unit is arranged between the emitter and the sample area in a vertical direction that is perpendicular to the main plane of extension of the integrated circuit. This means, electromagnetic radiation emitted by the emitter is modulated by the modulation unit before it reaches the sample area. This arrangement enables a very compact design of the spectrometer.

According to at least one embodiment of the spectrometer a transmission region is arranged between the sample area and the emitter in the vertical direction, wherein the transmission region has a transmissivity of at least 0.7 for electromagnetic radiation emitted by the emitter. In particular, the transmission region has a transmissivity of at least 0.9 for electromagnetic radiation emitted by the emitter. The transmission region can further be arranged between the sample area and the optical detector in the vertical direction. This means, the transmission region covers both the emitter and the optical detector. Electromagnetic radiation emitted by the emitter can reach the sample area via the transmission region. Furthermore, electromagnetic radiation emitted by the emitter can reach the optical detector via the transmission region. The presence of the sample matter that is arranged in close or direct contact to the sample area changes the intensity of the wavelengths of the electromagnetic radiation that is transmitted to the optical detector. From this characteristic change in intensity properties of the sample matter can be determined.

According to at least one embodiment of the spectrometer the sample area is arranged between the emitter and the optical detector in the vertical direction, and the sample area is arranged adjacent to an opening within the spectrometer. In the vertical direction the emitter is arranged above the sample area and the sample area is arranged above the optical detector. The opening within the spectrometer is in direct contact with the environment of the spectrometer. This means, gas in the environment of the spectrometer can reach the opening and thus the sample area. The opening can be surrounded by the spectrometer from at least two different sides. The opening can be a channel which extends through the spectrometer. For analyzing sample matter it is necessary to place the sample matter within the opening. For example gases can easily reach the opening. Electromagnetic radiation emitted by the emitter can pass through the opening and the sample matter. Thereby the intensity of the wavelengths that are transmitted by the sample matter is changed depending on the characteristic absorption of the sample matter. By detecting the transmitted electromagnetic radiation by the optical detector, properties of the sample matter can be determined. Therefore, the spectrometer enables to analyze different materials.

According to at least one embodiment of the spectrometer the optical filter is arranged between the modulation unit and the optical detector in the vertical direction. After passing the sample area or the transmission region electromagnetic radiation emitted by the emitter reaches the modulation unit. After the modulation of the electromagnetic radiation unwanted components are filtered by the optical filter. Subsequently, the electromagnetic radiation is detected by the optical detector. As the lock-in technique is employed, the wavelengths of interest can be detected with an improved accuracy.

According to at least one embodiment of the spectrometer the modulation unit is arranged between the optical filter and the optical detector in the vertical direction. After passing the sample area or the transmission region electromagnetic radiation emitted by the emitter reaches the optical filter and unwanted components are filtered out. Afterwards, the filtered electromagnetic radiation is modulated by the modulation unit. Subsequently, the electromagnetic radiation is detected by the optical detector. As the lock-in technique is employed the wavelengths of interest can be detected with an improved accuracy.

Furthermore, a portable device for use in the consumer electronics market is provided. The portable device comprises the spectrometer. The portable device is in particular a mobile phone, a wearable or a laptop computer. The spectrometer is particularly suitable to be employed in a portable device as it can be designed to be very small.

Furthermore, a method for detecting electromagnetic radiation is provided. The spectrometer can preferably be employed for the method for detecting electromagnetic radiation described herein. This means all features disclosed for the spectrometer are also disclosed for the method for detecting electromagnetic radiation and vice-versa.

According to at least one embodiment of the method for detecting electromagnetic radiation, the method comprises emitting electromagnetic radiation by an emitter. The electromagnetic radiation emitted by the emitter can be broad band and/or in the visible and infrared range.

The method further comprises directing the emitted electromagnetic radiation to a sample area. For this purpose the electromagnetic radiation emitted by the emitter can be emitted in the direction of the sample area. In this case it is not required to redirect electromagnetic radiation. This means, a main side of emission of the emitter faces the sample area.

The method further comprises placing sample matter on or above the sample area. If the sample matter is a solid or a liquid it can be placed directly on the sample area. If the sample matter is a gas, the gas can be provided in the environment of the spectrometer. In this way the gas is in direct contact with or close to the sample area.

The method further comprises temporally modulating electromagnetic radiation emitted by the emitter in a modulation unit comprising an electrochromic material. The electromagnetic radiation is temporally modulated by applying a modulated voltage to the electrochromic material. The electrochromic material changes its transmissivity depending on the applied voltage. Therefore, the modulation unit with the electrochromic material has the effect of a chopper.

The method further comprises transmitting electromagnetic radiation within a predefined wavelength range by an optical filter. The predefined wavelength range depends on the properties of the optical filter. The optical filter can be configured to have a transmission coefficient of at least 0.8 within the predefined wavelength range. It is further possible that the optical filter has a transmission coefficient of at least 0.9 within the predefined wavelength range.

The method further comprises detecting electromagnetic radiation transmitted by the optical filter by an optical detector.

The modulation of the modulation unit is controlled by an integrated circuit. This can mean, that the integrated circuit is configured to apply a voltage to the modulation unit. The electrochromic material of the modulation unit is electrically connected with the integrated circuit for this purpose.

As the electromagnetic radiation is modulated by the modulation unit, the electromagnetic radiation can be detected by a lock-in technique. The combination of employing an electrochromic material for modulating electromagnetic radiation to be detected and a lock-in technique in the integrated circuit enables the detection of electromagnetic radiation with an improved accuracy in particular for electromagnetic radiation in the visible and/or infrared range. Since the components of the spectrometer can be arranged very compact, the spectrometer can advantageously be incorporated in small devices such as portable devices.

According to at least one embodiment of the method electromagnetic radiation emitted by the emitter is modulated before passing the optical filter, and the optical filter is configured to transmit the modulated electromagnetic radiation. In this way, the signal-to-noise ratio of the electromagnetic radiation to be detected by the optical detector is further improved.

The following description of figures may further illustrate and explain exemplary embodiments. Components that are functionally identical or have an identical effect are denoted by identical references. Identical or effectively identical components might be described only with respect to the figures where they occur first. Their description is not necessarily repeated in successive figures.
Figures 1A, 1B, 1C, 1D and 1E show exemplary embodiments of the spectrometer.
Figures 2A, 2B, 2C, 2D and 2E show further exemplary embodiments of the spectrometer.
Figure 3 shows a cross-section through an exemplary embodiment of the spectrometer.
Figure 4 shows an exemplary embodiment of the modulation unit.
Figure 5 shows a simulated transmission through the modulation unit.
Figure 6 shows another exemplary embodiment of the modulation unit.
Figure 7 shows an exemplary embodiment of a portable device.

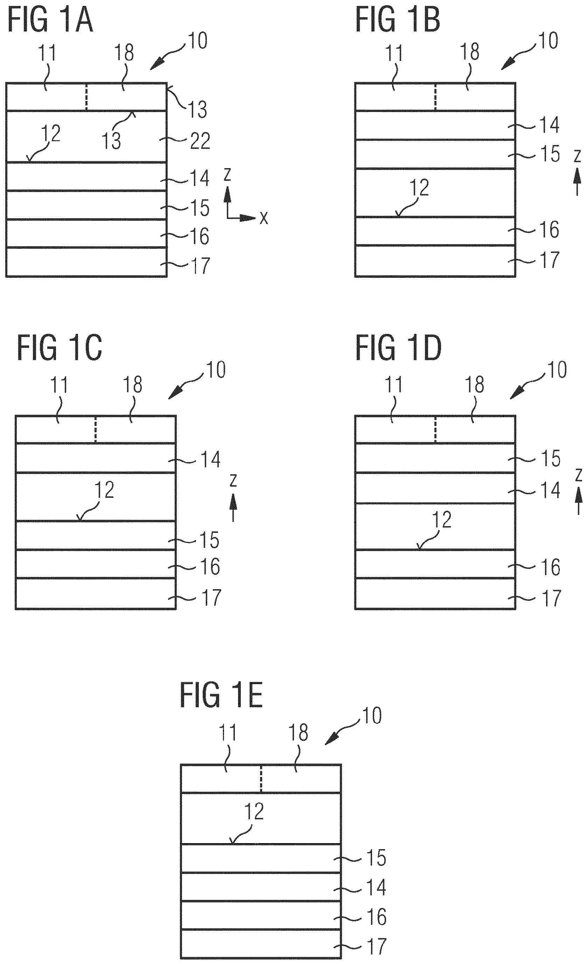

In figure 1A an exemplary embodiment of a spectrometer 10 is shown. The spectrometer 10 comprises an emitter 11 that is configured to emit electromagnetic radiation. The emitter 11 is arranged adjacent to a sample area 12 that is arranged at an outer face 13 of the spectrometer 10. The sample area 12 is arranged adjacent to an opening 22 within the spectrometer 10. The opening 22 can extend completely through the spectrometer 10. The opening 22 is arranged between the emitter 11 and a modulation unit 14. This means, the opening 22 is a channel between the emitter 11 and the modulation unit 14. The sample area 12 is located at the outer surface of the spectrometer 10 within the opening 22. Within the opening 22 the outer surfaces of the spectrometer 10 are in direct contact with the environment of the spectrometer 10. The opening 22 can be configured in such a way that gases from the environment of the spectrometer 10 can penetrate the opening 22.

The modulation unit 14 comprises an electrochromic material. Furthermore, the modulation unit 14 is configured to modulate electromagnetic radiation temporally. The spectrometer 10 further comprises an optical filter 15 on which the modulation unit 14 is arranged. The optical filter 15 is arranged on an optical detector 16. The optical filter 15 is configured to transmit electromagnetic radiation modulated by the modulation unit 14. Moreover, the optical detector 16 is configured to detect electromagnetic radiation in the visible and in the infrared range. The optical detector 16 can be a photon detector or a thermal detector. The optical detector 16 is arranged on an integrated circuit 17 that has a main plane of extension and that comprises a lock-in detection function. The electrochromic material of the modulation unit 14 is electrically connected with the integrated circuit 17. In this way, the integrated circuit 17 can control the modulation frequency.

In this configuration there exists an optical path for electromagnetic radiation emitted by the emitter 11 towards the optical detector 16 via the sample area 12, the modulation unit 14 and the optical filter 15.

In a vertical direction z that is perpendicular to the main plane of extension of the integrated circuit 17 the sample area 12 is arranged between the emitter 11 and the optical detector 16. The optical filter 15 is arranged between the modulation unit 14 and the optical detector 16 in the vertical direction z. The opening 22 extends through the spectrometer 10 in a lateral direction x which is parallel to the main plane of extension of the integrated circuit 17.

Optionally, a further optical detector 18 is arranged adjacent to the emitter 11. Since the further optical detector 18 is optional, it is separated from the emitter 11 only by a dashed line. The further optical detector 18 is configured to detect electromagnetic radiation emitted by the emitter 11 and reflected at sample matter within the opening 22 or at the modulation unit 14. In this way, the temperature drift of the emitter 11 can be determined and calibrated which enables a more reproducible and more reliable measurement of the spectrometer 10. The embodiment shown in figure 1A is particularly suitable for monitoring the temperature drift of the emitter 11.

The spectrometer 10 described herein can be employed in a method for detecting electromagnetic radiation. The method comprises emitting electromagnetic radiation by the emitter 11. The emitted electromagnetic radiation is directed to the sample area 12. In figure 1A the emitter 11 mainly emits electromagnetic radiation in the direction of the sample area 12. On or above the sample area 12, sample matter is placed. The sample matter can be a solid, a liquid or a gas. The embodiment shown in figure 1A is most suitable for gases as they can easily reach the opening 22. Afterwards, the electromagnetic radiation emitted by the emitter 11 and transmitted by the sample matter is temporally modulated in the modulation unit 14. The optical filter 15 transmits electromagnetic radiation within a predefined wavelength range. Furthermore, the optical filter 15 is configured to transmit the modulated electromagnetic radiation. Subsequently, the electromagnetic radiation transmitted by the optical filter 15 is detected by the optical detector 16. The optical detector 16 converts the electromagnetic radiation reaching the optical detector 16 into a modulated voltage signal. This voltage signal is amplified by the integrated circuit 17. From the voltage signal it can be determined how the intensity of the electromagnetic radiation transmitted by the sample matter is changed by the sample matter. In this way, properties of the sample matter can be determined.

Figure 1B shows another exemplary embodiment of the spectrometer 10. The setup is different from the setup of figure 1A in that the modulation unit 14 and the optical filter 15 are arranged above the sample area 12. This means, the modulation unit 14 is arranged between the emitter 11 and the optical filter 15 in the vertical direction z. The optical filter 15 is arranged between the sample area 12 and the modulation unit 14 in the vertical direction z.

Figure 1C shows another exemplary embodiment of the spectrometer 10. The setup is different from the setup of figure 1A in that the modulation unit 14 is arranged between the emitter 11 and the sample area 12 in the vertical direction z. The sample area 12 is arranged between the modulation unit 14 and the optical filter 15 in the vertical direction z.

Figure 1D shows another exemplary embodiment of the spectrometer 10. The setup is different from the setup of figure 1B in that the positions of the modulation unit 14 and the optical filter 15 are exchanged. This means, the optical filter 15 is arranged between the emitter 11 and the modulation unit 14 in the vertical direction z. The modulation unit 14 is arranged between the optical filter 15 and the sample area 12 in the vertical direction z.

Figure 1E shows another exemplary embodiment of the spectrometer 10. The setup is different from the setup of figure 1A in that the positions of the optical filter 15 and the modulation unit 14 are exchanged. This means, the optical filter 15 is arranged between the sample area 12 and the modulation unit 14 in the vertical direction z. The modulation unit 14 is arranged between the optical filter 15 and the optical detector 16 in the vertical direction z.

The embodiments shown in figures 1A, 1B, 1C, 1D and 1E are different possibilities for arranging the parts of the spectrometer 10 on top of each other. Some or all parts of the spectrometer 10 can be monolithically integrated. This means, some or all parts of the spectrometer 10 can be grown directly on top of each other.

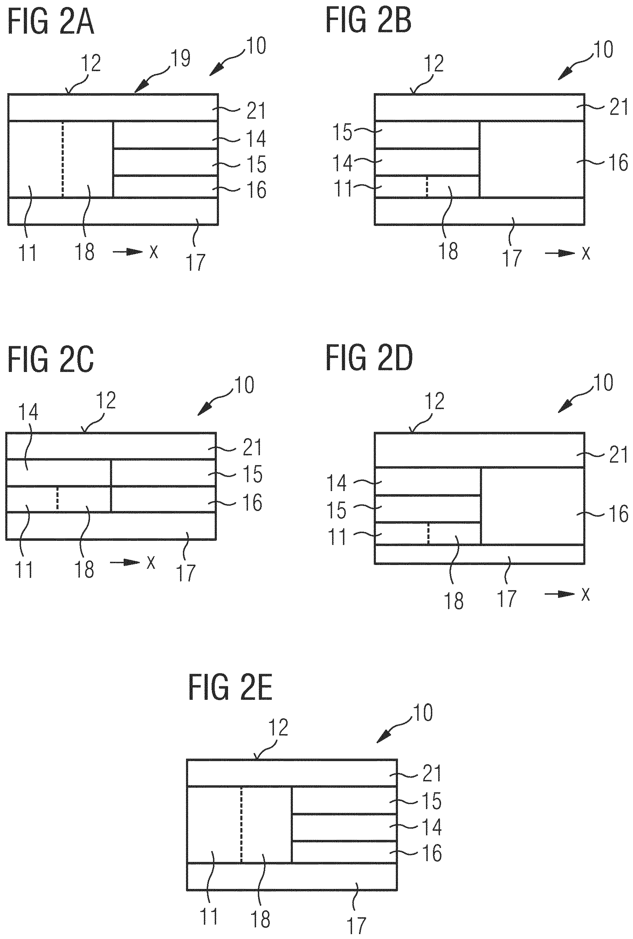

Figures 2A, 2B, 2C, 2D and 2E show another set of exemplary embodiments of the spectrometer 10. These arrangements differ from the embodiments shown in the previous figures in that the sample area 12 is arranged at a top side 19 of the spectrometer 10. This means, the emitter 11, the modulation unit 14, the optical filter 15, the optical detector 16 and the integrated circuit 17 are arranged on the same side of the sample area 12.

Figure 2A shows another exemplary embodiment of the spectrometer 10. On the integrated circuit 17 the emitter 11 is arranged. Optionally, the further optical detector 18 is arranged adjacent to the emitter 11 on the integrated circuit 17. In a lateral direction x next to the emitter 11 the optical detector 16 is arranged on the integrated circuit 17, where the lateral direction x extends parallel to the main plane of extension of the integrated circuit 17. On the optical detector 16 the optical filter 15 is arranged. On the optical filter 15 the modulation unit 14 is arranged. On the emitter 11, the further optical detector 18 and the modulation unit 14 a transmission region 21 is arranged. The transmission region 21 has a transmissivity of at least 0.7 for electromagnetic radiation emitted by the emitter 11. On top of the transmission region 21 the sample area 12 is arranged. This means, the sample area 12 is arranged at a top side 19 of the spectrometer 10. The top side 19 of the spectrometer 10 forms an outer face 13. The sample matter can easily be placed on the sample area 12. The embodiments shown in figures 2A to 2E are particularly suitable for all kinds of sample matter. Solids and liquids can be placed on the sample area 12 and gases can be provided in the environment of the spectrometer 10.

Figure 2B shows another exemplary embodiment of the spectrometer 10. The setup is different from the setup shown in figure 2A in that the modulation unit 14 is arranged on top of the emitter 11. Furthermore, the optical filter 15 is arranged on top of the modulation unit 14. The optical detector 16 is arranged next to the emitter 11, the modulation unit 14 and the optical filter 15 in the lateral direction x.

Figure 2C shows another exemplary embodiment of the spectrometer 10. The setup is different from the setup shown in figure 2A in that the modulation unit 14 is arranged on top of the emitter 11. The optical filter 15 and the optical detector 16 are arranged next to the emitter 11 and the modulation unit 14 in the lateral direction x.

Figure 2D shows another exemplary embodiment of the spectrometer 10. The setup is different from the setup shown in figure 2B in that the positions of the modulation unit 14 and the optical filter 15 are exchanged. This means, the emitter 11, the optical filter 15 and the modulation unit 14 are arranged next to the optical detector 16 in the lateral direction x.

Figure 2E shows another exemplary embodiment of the spectrometer 10. The setup is different from the setup shown in figure 2A in that the positions of the optical filter 15 and the modulation unit 14 are exchanged. This means, the modulation unit 14 is arranged between the optical filter 15 and the optical detector 16 in the vertical direction z.

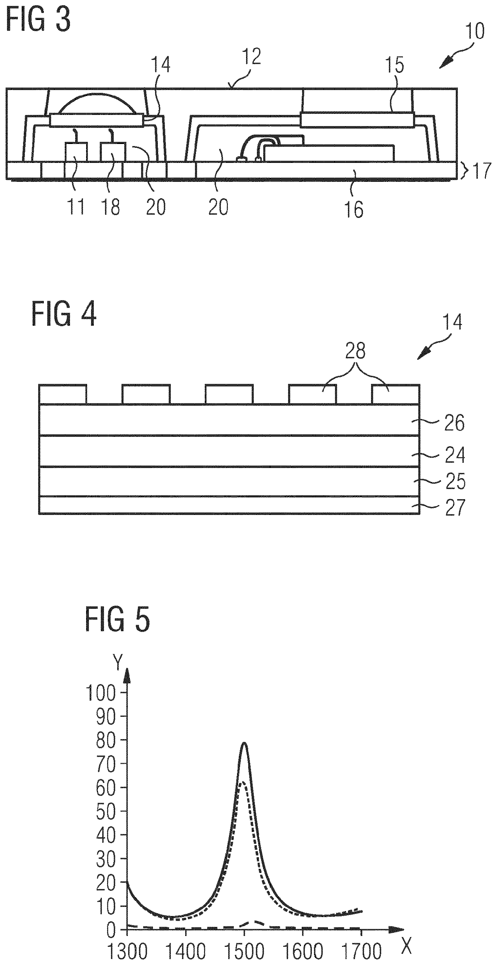

Figure 3 shows a cross section through a further exemplary embodiment of the spectrometer 10. The emitter 11 and the further optical detector 18 are arranged on the integrated circuit 17 next to each other. The modulation unit 14 is arranged above the emitter 11 and the further optical detector 18. Furthermore, the optical detector 16 is arranged on the integrated circuit 17. The optical detector 16 is arranged spaced apart from the further optical detector 18 and the emitter 11. The optical filter 15 is arranged above the optical detector 16. The sample area 12 is arranged above the modulation unit 14 and the optical filter 15. The emitter 11 and the optical detector 16 are arranged in different cavities 20 of the spectrometer 10.

Figure 4 shows an exemplary embodiment of the modulation unit 14. The modulation unit 14 comprises a first electrode 27 on which a charge storage layer 25 is arranged. On the charge storage layer 25 an ion conducting layer 24 is arranged. On the ion conducting layer 24 an active layer 26 comprising the electrochromic material is arranged. On the active layer 26 a second electrode 28 in the shape of a grid is arranged. The second electrode 28 can be thin enough so that it has a transmissivity of at least 0.9.

Figure 5 shows a simulated transmission through the modulation unit 14. On the x-axis the wavelength is plotted in nanometers. On the y-axis the transmission is plotted in percent. The transmission was simulated for the modulation unit 14 arranged on a Fabry Perot interference filter as the optical filter 15. The optical filter 15 has a peak transmission of 1500 nm. The first and the second electrode 27, 28 are not included in the simulation.

The continous line shows the transmission of the optical filter 15 without the modulation unit 14. The dotted line shows the transmission of the optical filter 15 with the modulation unit 14 for the state of maximum transmission of the electrochromic material. The dashed line shows the transmission of the optical filter 15 with the modulation unit 14 for the state of minimum transmission of the electrochromic material. The maximum transmission is slightly reduced by introducing the modulation unit 14. For the state of minimum transmission of the electrochromic material the overall transmission is reduced to below 5 %. By switching between the state of maximum transmission and the state of minimum transmission electromagnetic radiation passing the modulation unit 14 is modulated.

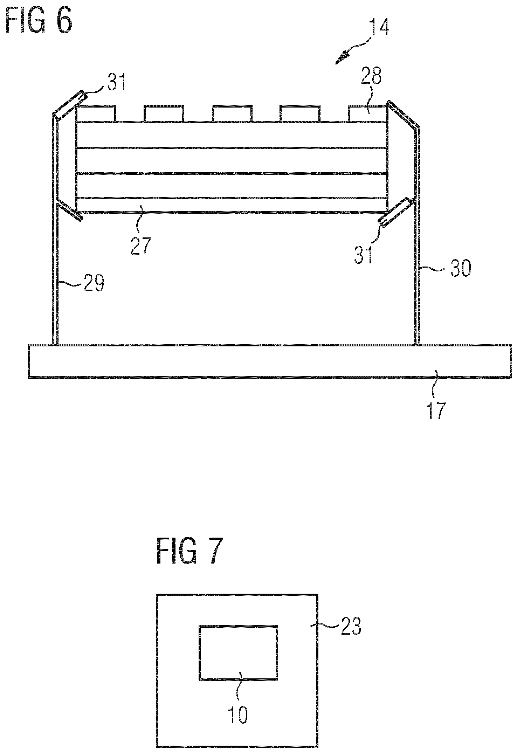

Figure 6 shows another exemplary embodiment of the modulation unit 14. The modulation unit 14 has the setup as shown in figure 4. Figure 6 shows the arrangement of the modulation unit 14 on top of the integrated circuit 17. The modulation unit 14 is held above the surface of the integrated circuit 17 by a first metal bracket 29 and a second metal bracket 30. The modulation unit 14 is clamped between the metal brackets 29, 30. In this way, the position of the modulation unit 14 is fixed. Via the metal brackets 29, 30 the modulation unit 14 is electrically connected with the integrated circuit 17. The first metal bracket 29 is in electrical contact with the first electrode 27 of the modulation unit 14. An upper part of the first metal bracket 29 comprises an isolation 31 so that the first metal bracket 29 only electrically contacts the first electrode 27. The second metal bracket 30 is in electrical contact with the second electrode 28. A part of the second metal bracket 30 comprises an isolation 31 so that the second metal bracket 30 only electrically contacts the second electrode 28.

Figure 7 shows an exemplary embodiment of a portable device 23 for use on the consumer electronics market. The portable device 23 comprises the spectrometer 10. The portable device 23 can be a mobile phone, a wearable or a laptop computer.

### Reference numerals

- 10: spectrometer
- 11: emitter
- 12: sample area
- 13: outer face
- 14: modulation unit
- 15: optical filter
- 16: optical detector
- 17: integrated circuit
- 18: further optical detector
- 19: top side
- 20: cavity
- 21: transmission region
- 22: opening
- 23: portable device
- 24: ion conducting layer
- 25: charge storage layer
- 26: active layer
- 27: first electrode
- 28: second electrode
- 29: first metal bracket
- 30: second metal bracket
- 31: isolation
- x: lateral direction
- z: vertical direction

## Claims

1. Spectrometer (10) comprising:
- an emitter (11) that is configured to emit electromagnetic radiation,
- a sample area (12) that is arranged at an outer face (13) of the spectrometer (10),
- a modulation unit (14) comprising an electrochromic material,
- an optical filter (15),
- an optical detector (16),
- an integrated circuit (17) that has a main plane of extension, and
- an optical path for electromagnetic radiation emitted by the emitter (11) towards the optical detector (16) via the sample area (12), the modulation unit (14) and the optical filter (15), wherein
- the electrochromic material is electrically connected with the integrated circuit (17), and
- the modulation unit (14) is configured to modulate electromagnetic radiation temporally.

2. Spectrometer (10) according to claim 1, wherein the optical filter (15) is configured to transmit electromagnetic radiation modulated by the modulation unit (14).

3. Spectrometer (10) according to one of the preceding claims, wherein the integrated circuit (17) comprises a lock-in detection function.

4. Spectrometer (10) according to one of the preceding claims, wherein the optical detector (16) is configured to detect electromagnetic radiation in the visible and in the infrared range.

5. Spectrometer (10) according to one of the preceding claims, wherein the optical detector (16) is a photon detector or a thermal detector.

6. Spectrometer (10) according to one of the preceding claims, wherein a further optical detector (18) is arranged adjacent to the emitter (11).

7. Spectrometer (10) according to one of the preceding claims, wherein the emitter (11), the modulation unit (14), the optical filter (15), the optical detector (16) and the integrated circuit (17) are arranged on the same side of the sample area (12).

8. Spectrometer (10) according to one of the preceding claims, wherein the modulation unit (14) is arranged between the emitter (11) and the sample area (12) in a vertical direction (z) that is perpendicular to the main plane of extension of the integrated circuit (17).

9. Spectrometer (10) according to one of the preceding claims, wherein a transmission region (21) is arranged between the sample area (12) and the emitter (11) in a vertical direction (z) that is perpendicular to the main plane of extension of the integrated circuit (17), wherein the transmission region (21) has a transmissivity of at least 0.7 for electromagnetic radiation emitted by the emitter (11) .

10. Spectrometer (10) according to one of claims 1 to 6, wherein the sample area (12) is arranged between the emitter (11) and the optical detector (16) in a vertical direction (z), and the sample area (12) is arranged adjacent to an opening (22) within the spectrometer (10), wherein the vertical direction (z) is perpendicular to the main plane of extension of the integrated circuit (17).

11. Spectrometer (10) according to one of the preceding claims, wherein the optical filter (15) is arranged between the modulation unit (14) and the optical detector (16) in a vertical direction (z) that is perpendicular to the main plane of extension of the integrated circuit (17).

12. Spectrometer (10) according to one of claims 1 to 10, wherein the modulation unit (14) is arranged between the optical filter (15) and the optical detector (16) in a vertical direction (z) that is perpendicular to the main plane of extension of the integrated circuit (17).

13. Portable device (23) for use on the consumer electronics market, the portable device (23) comprising the spectrometer (10) according to one of the preceding claims, wherein the portable device (23) is in particular a mobile phone, a wearable or a laptop computer.

14. Method for detecting electromagnetic radiation, the method comprising:
- emitting electromagnetic radiation by an emitter (11),
- directing the emitted electromagnetic radiation to a sample area (12),
- placing sample matter on or above the sample area (12),
- temporally modulating electromagnetic radiation emitted by the emitter (11) in a modulation unit (14) comprising an electrochromic material,
- transmitting electromagnetic radiation within a predefined wavelength range by an optical filter (15), and
- detecting electromagnetic radiation transmitted by the optical filter (15) by an optical detector (16), wherein
- the modulation of the modulation unit (14) is controlled by an integrated circuit (17).

15. Method according to the preceding claim, wherein electromagnetic radiation emitted by the emitter (11) is modulated before passing the optical filter (15), and the optical filter (15) is configured to transmit the modulated electromagnetic radiation.
